# EUROPEAN PATENT SPECIFICATION

(11) **EP 1 963 095 B1**
(45) Date of publication and mention of the grant of the patent: **23.06.2010**
(21) Application number: 06841062.0
(22) Date of filing: 20.12.2006
(51) Int. Cl.: B32B 15/14, B64C 1/00, B64C 1/12, B64C 3/26, B64C 3/28

(54) **PROTECTION DEVICE**
SCHUTZVORRICHTUNG
DISPOSITIF DE PROTECTION

(30) Priority: 20.12.2005 DE 102005060958; 20.12.2005 US 751898 P
(43) Date of publication of application: 03.09.2008
(73) Proprietor: Airbus Operations GmbH, 21129 Hamburg (DE)
(72) Inventor: GROSS, Claus-Peter, 21614 Buxtehude (DE); KRAFZIK, Stefan, 21271 Hanstedt (DE)
(74) Representative: Maiwald Patentanwalts GmbH
(86) International application number: PCT/EP2006/012317
(87) International publication number: WO 2007/071398

(56) References cited:
- EP-A- 1 336 469
- EP-A1- 0 529 917
- WO-A-03/000546
- WO-A-03/068494
- WO-A-2005/087589

## Description

### Field of the Invention

The present invention relates to a device for protecting a structure, in particular for protecting an aircraft structure against e.g. bird strike.

In order to obtain certification, commercial aircraft have to pass the so-called bird-strike test or "chicken test". In this test the impact of a bird weighing 81b during a flight at 340 kt is simulated on an aircraft structure.

In particular the nose regions of the aircraft structure are critical regions, for which special measures have to be provided in order to pass the bird-strike text.

Normally these regions comprise structures made of aluminium sheeting, carbon fibre, glass fibre etc.

Despite these structures, time and again, bird strikes result in impact penetration of the structure and in damage to the aircraft structure, in particular in the nose regions.

Furthermore, known structures are relatively heavy, which is disadvantageous especially in the context of aircraft.

EP 1 336 469 A1 shows methods of manufacturing s stiffening element for an aircraft skin panel of sheet-metal strips and at least one layer of resin-impregnated fibre. WO 2005/087589 A1 shows a laminate consisting of alternating metal layers and plastic adhesive layers located between the metal layers for the production of structural parts such as panels for aviation, wherein a heating layer is provided between at least two metal layers. WO 03/068494 A1 shows a laminate comprising at least one series of metal layers and fibre-reinforced plastic layers, providing at least two series with a transition inbetween, wherein at least one of the internal layers is discontinuous.

### Summary of the Invention

It is an object of the invention to create a device that reliably prevents damage to the aircraft structure as a result of e.g. bird strike, and which device furthermore is light in weight.

This object may be met as disclosed in claim 1. Advantageous embodiments of the invention are provided in the dependent claims.

The device according to the invention comprises a skin made of GLARE, which skin can be affixed to a structure (aircraft structure) to be protected. The skin can for example be affixed or attached by riveting, screwing, bonding etc. to an aircraft structure such that a void or opening is created between the aircraft structure and the skin, into which void the skin deforms when a force acts on the skin, so as to absorb the force acting on the skin without damaging the aircraft structure.

The material GLARE (GLAss-fibre REinforced aluminium) comprises a multitude of layers, each being only a few tenths of a millimetre in thickness. These layers are alternately made of aluminium and of a glass fibre laminate (glass-fibre reinforced plastic). These layers are bonded to each other under pressure.

The material GLARE provides a very significant advantage in that it can absorb a lot of energy without tearing. In this process the energy is transformed leaving permanent deformation. Thus, for example, the aircraft structure that is situated behind the impact location remains undamaged to a very large extent; i.e. a bird impacting on the skin made of GLARE does not penetrate right through to the aircraft structure.

According to the invention, said device comprises a multitude of ribs that are located on that surface of the skin, which surface faces towards the aircraft structure.

The ribs are used for stiffening the device if this is aerodynamically required. The ribs can be necessary for aerodynamic reasons in order to avoid a change in the profile contour of the aircraft structure because a deviation of the required profile contour leads to an impairment of the aerodynamics.

The ribs comprise GLARE that causes stiffening of the device.

The ribs can be connected to the skin, for example by bonding, riveting, bonding and riveting, screwing etc.

### Brief description of the drawing

Below, a preferred exemplary embodiment of the invention is described with reference to the enclosed figures, wherein in the figures the same reference characters are used for identical components.
Fig. 1 shows a perspective view of a device according to the exemplary embodiment.
Fig. 2 shows a lateral top view of the device according to Fig. 1 in an installed state.

### Detailed description of exemplary embodiments

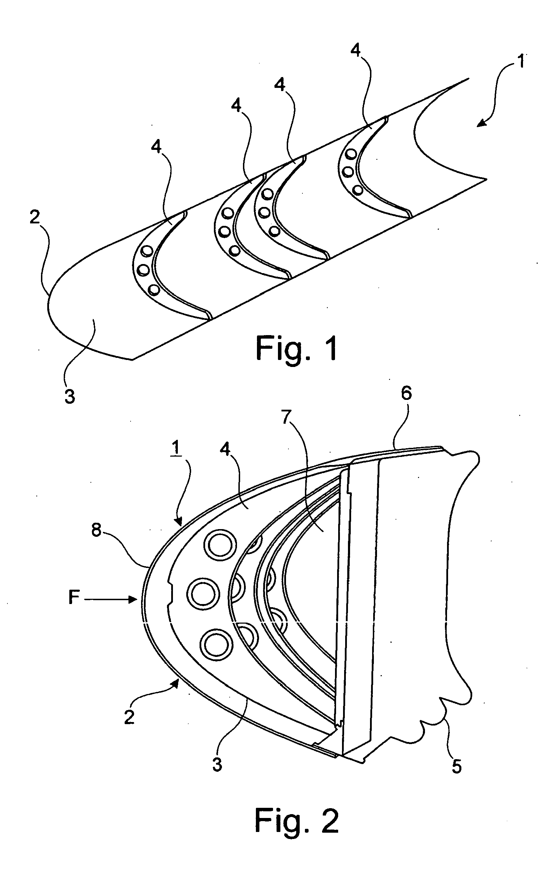

Fig. 1 shows a perspective view of a device 1 for protecting an aircraft structure (not shown), for example in the region of the nose of an aircraft.

The device 1 comprises a skin 2 made om the material GLARE. On a surface 3 of the skin 2, which surface faces the aircraft structure (not shown), a multitude of ribs 4 are arranged in order to stiffen the device 1.

According to the preferred exemplary embodiment shown in Fig. 1, the ribs 4 are crescent shaped; however, they can have any desired shape. The ribs 4 are, for example, arranged so as to be equidistant from each other; however, they can also be arranged so as to be spaced apart from each other at different spacings according to aerodynamic requirements.

The ribs are also made of GLARE, and are, for example, bonded, glued, screwed, riveted or connected in some other way to the skin surface 3.

Fig. 2 shows a somewhat perspective top view of the device 1 that is affixed to an aircraft structure 5 to be protected.

The device 1 is, for example, in a region 6 screwed, bonded, glued, riveted etc. or otherwise firmly connected to the aircraft structure 5.

As shown in Fig. 2, a void or space 7 is formed between the skin 2 of the device 1 and the aircraft structure 5. This void 7 provides a buffer zone in order to absorb a force F that acts on an exterior surface 8 of the skin 2, in that the skin 2 deforms in the direction of the aircraft structure 5, i.e. into the void 7. In this arrangement the size of the void 7 matches the aerodynamic requirements, the profile contour of the aircraft structure, as well as the deformation characteristics of the GLARE material so as to prevent damage to the aircraft structure 5 from occurring.

Although the invention has been described above with reference to a preferred exemplary embodiment, it goes without saying that modifications and changes can be made without leaving the protective scope of the invention as defined by the claims.

Furthermore, the invention can be used not only in aircraft engineering but also in other areas, for example in automotive engineering, to protect a structure against the effect of a force.

### LIST OF REFERENCE CHARACTERS

- 1: Device
- 2: Skin
- 3: Interior skin surface
- 4: Ribs
- 5: Aircraft structure
- 6: Region
- 7: Void
- 8: Exterior skin surface
- F: Force

## Claims

1. A device for protecting a structure (5), comprising a skin (2) made of GLARE, i.e. a material comprising a multitude of alternating aluminium and glass-fibre reinforced plastic layers, each being a few tenths of a millimetre in thickness, which skin (2) is attachable to the structure (5) so that it creates a hollow deformation space (7) between the structure (5) and the skin (2), into which hollow deformation space (7) the skin (2) deforms when a force acts on it, so as to absorb the force acting on the skin without damaging the structure (5), **characterised in that** the device comprises a plurality of ribs (4) that are located on the surface (3) of the skin (2), which surface is adapted to face towards the aircraft structure (5), wherein the plurality of the ribs (4) are adapted to match the profile contour of the structure (5) and wherein the ribs (4) are made of GLARE, i.e. a material comprising a multitude of alternating aluminium and glass-fibre reinforced plastic layers, each being a few tenths of a millimetre in thickness.

2. The device of claim 1, wherein if a force acts on the skin (2), said skin (2) remains permanently deformed.

3. The device of any one of claims 1 or 2, wherein the ribs (4) are at least one of glued, screwed, riveted and bonded to the skin (2).

4. The device of any one of claims 1 to 3, wherein the skin (2) is adapted to be at least one of glued, screwed, riveted and bonded to the structure (5).

5. The use of the device of any one of claims 1 to 4 for an aircraft nose.

## Patentansprüche

1. Vorrichtung zum Schützen einer Struktur (5), aufweisend eine Haut (2) aus GLARE, d. h. einem Material, das eine Vielzahl alternierender Aluminium- und glasfaserverstärkter Kunststoffschichten aufweist, die jeweils wenige Zehntel Millimeter dick sind, wobei die Haut (2) an der Struktur (5) anbringbar ist, so dass zwischen der Struktur (5) und der Haut (2) ein Deformationshohlraum (7) gebildet wird, in den sich die Haut (2) bei Einwirkung einer Kraft zur Absorption der Kraft verformt, ohne dass die Struktur (5) beschädigt wird,
**dadurch gekennzeichnet, dass** die Vorrichtung eine Vielzahl von Rippen (4), die auf der der Struktur (5) zugewandten Oberfläche (3) der Haut (2) ausgebildet sind, aufweist, wobei die Rippen (4) an eine Profilkontur der Struktur (5) angepasst sind und wobei die Rippen (4) aus GLARE bestehen, d.h. einem Material, das eine Vielzahl alternierender Aluminium- und glasfaserverstärkter Kunststoffschichten aufweist, die jeweils wenige Zehntel Millimeter dick sind.

2. Vorrichtung nach Anspruch 1, wobei bei Einwirkung einer Kraft auf die Haut (2) diese bleibend verformt wird.

3. Vorrichtung nach Anspruch 1 oder 2, wobei die Rippen (4) mit der Haut (2) verschraubt, vernietet und/oder verklebt sind.

4. Vorrichtung nach einem der Ansprüche 1 bis 3, wobei die Haut (2) dazu eingerichtet ist, mit der Struktur (5) verschraubt, vernietet und/oder verklebt zu werden.

5. Verwendung der Vorrichtung gemäß einem der Ansprüche 1 bis 4 für eine Flugzeugnase.

## Revendications

1. Dispositif pour protéger une structure (5), comportant une peau (2) constituée d'un matériau GLARE, c'est-à-dire comportant une multitude de couches alternées d'aluminium et de matière plastique renforcée par des fibres de verre, chacune ayant quelques dixièmes de millimètre d'épaisseur, laquelle peau (2) peut être fixée à la structure (5) de telle sorte qu'elle crée un espace de déformation creux (7) entre la structure (5) et la peau (2), espace de déformation creux (7) dans lequel la peau (2) se déforme lorsqu'une force agit sur celle-ci, de manière à absorber la force agissant sur la peau sans endommager la structure (5), **caractérisé en ce que** le dispositif comporte une pluralité de nervures (4) qui sont positionnées sur la surface (3) de la peau (2), laquelle surface est adaptée pour être dirigée vers la structure d'avion (5), dans lequel la pluralité de nervures (4) est adaptée pour correspondre au contour de profil de la structure (5) et dans lequel les nervures (4) sont constituées d'un matériau GLARE, c'est-à-dire un matériau comportant une multitude de couches alternées d'aluminium et de matière plastique renforcée par des fibres de verre, chacune ayant quelques dixièmes de millimètre d'épaisseur.

2. Dispositif selon la revendication 1, dans lequel, si une force agit sur la peau (2), ladite peau (2) reste déformée de manière permanente.

3. Dispositif selon l'une quelconque des revendications 1 ou 2, dans lequel les nervures (4) sont au moins collées, vissées, rivetées et/ou assemblées à la peau (2).

4. Dispositif selon l'une quelconque des revendications 1 à 3, dans lequel la peau (2) est adaptée pour être au moins collée, vissée, rivetée et/ou assemblée à la structure (5).

5. Utilisation du dispositif selon l'une quelconque des revendications 1 à 4 pour un nez d'avion.
